## Europäisches Patentamt
## European Patent Office
## Office européen des brevets

(19)

(11) Numéro de publication: **0 204 617**
**B1**

(12)

# FASCICULE DE BREVET EUROPÉEN

(45) Date de publication du fascicule du brevet:
**15.11.89**

(51) Int. Cl.⁴: **G 01 C 19/32**, G 01 C 23/00

(21) Numéro de dépôt: **86401131.7**

(22) Date de dépôt: **28.05.86**

(54) **Dispositif de visualisation de pannes pour instruments gyroscopiques.**

(30) Priorité: **28.05.85 FR 8507964**

(43) Date de publication de la demande:
**10.12.86 Bulletin 86/50**

(45) Mention de la délivrance du brevet:
**15.11.89 Bulletin 89/46**

(84) Etats contractants désignés:
**DE GB IT SE**

(56) Documents cité:
**FR-A-1 113 866**
**FR-A-2 135 861**
**US-A-2 504 582**
**US-A-3 732 739**
**US-A-3 851 324**

(73) Titulaire: **SOCIETE FRANCAISE D'EQUIPEMENTS POUR LA NAVIGATION AERIENNE (S.F.E.N.A.), B.P. 59 Aérodrome de Villacoublay, F-78141 Velizy Villacoublay Cédex (FR)**

(72) Inventeur: **Boyer, Francis, 9 rue des Magnolias Elancourt, F-78310 Maurepas (FR)**

(74) Mandataire: **Rinuy, Santarelli, 14, avenue de la Grande Armée, F-75017 Paris (FR)**

EP 0 204 617 B1

## Description

L'invention se rapporte à un dispositif de visualisation de pannes pour instruments gyroscopiques.

On connaît, par les brevets français FR-A-2 068 156 et FR-A-2 135 861 au nom de la Demanderesse, des dispositifs permettant de mettre en évidence la vitesse de rotation d'un gyroscope et de la représenter aux yeux d'un observateur par le moyen d'un volet coloré, animé par un galvanomètre sensible.

De tels dispositifs peuvent être utilisés en conjugaison avec d'autres volets colorés, témoignant de la présence ou de l'absence d'une tension d'alimentation, aux bornes du gyroscope ou en un point d'entrée dans un boîtier incorporant ledit gyroscope.

Des avantages résultant d'une telle association sont décrits dans le brevet FR-A-2 135 861 déjà cité. Cependant, la mise en oeuvre de solutions de ce type se heurte à des difficultés d'implantation des organes de commande, leur volume d'espace balayé par leurs dispositifs de visualisation s'accommodant généralement mal du peu d'espace disponible dans les indicateurs qui les incorporent; ces difficultés d'installation peuvent être telles, pour des indicateurs de petite taille, que l'on soit obligé de renoncer à l'intégration du dispositif d'illustration de la vitesse se privant ainsi d'une information très utile dans les situations dites "d'urgence".

Un but de la présente invention est de permettre l'installation systématique quelle que soit la taille de l'indicateur qui l'incorpore, d'un moyen d'avertissement intuitif rendant compte simultanément de la disponibilité de l'alimentation et de la conformité de vitesse du gyroscope aux valeurs requises.

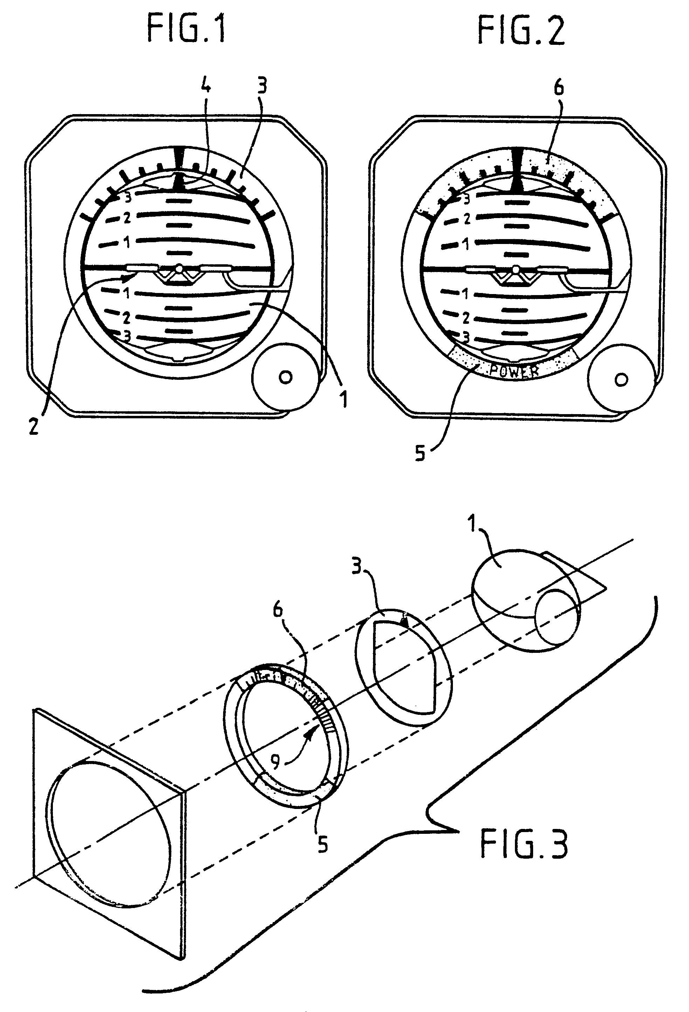

On distingue dans un horizon gyroscopique habituel un tambour de figuration de tangage 1, une maquette d'avion 2 et un cadran fixe de roulis 3 doté des repères classiques, en regard desquels évolue un index mobile en roulis 4. On doit noter que ces repères fixes et mobiles en roulis peuvent être intervertis comme cela est requis quelquefois, ou bien déplacés au bas de l'indicateur (voir la figure 1 des dessins annexés).

Dans une solution traditionnelle de la visualisation d'alarme, la disposition décrite ci-dessus est perturbée par la mise en place, sous l'oeil du pilote, et au moyen d'organes électro-mécaniques, de un ou deux volets vivement colorés, en rouge par exemple.

Comme il a été dit précédemment, ces solutions sont souvent difficiles à incorporer, et quelquefois impossibles dans le cas du deuxième volet, en raison des contraintes de volume que génèrent ces organes électro-mécaniques.

Par ailleurs, et toujours en raison de ces contraintes mécaniques, l'endroit de la figuration où l'on peut faire apparaître ces volets n'est pas toujours le meilleur, c'est-à-dire au plus près de l'indication.

La présente invention substitue à la classique solution électro-mécanique, une solution électro-optique mettant à profit les propriétés de certains cristaux liquides, connus par ailleurs.

Les cristaux liquides particuliers, considérés ici, présentent une apparence opaque lorsqu'ils sont soumis à une tension de commande et prennent une couleur distinctive lorsque cette tension de commande est supprimée.

L'effet peut être accentué par la mise en oeuvre de dispositifs d'éclairages incorporés ou extérieurs.

Par des procédés particuliers à la technologie des afficheurs à cristaux liquides, il est possible de réaliser des graphismes simples ou complexes (lettres, dessins) commutables ou pas (sérigraphie extérieure par exemple). Ces différentes possibilités sont mises à profit pour un arrangement spécifique à l'indicateur gyroscopique d'aéronefs, offrant ainsi une meilleure qualité opérationnelle à ce type d'indicateur.

Il doit être remarqué que, en raison de sa conception, la solution électro-optique apportée par l'invention au problème de la double alarme ne perturbe que très peu l'architecture de l'indicateur traditionnel puisqu'elle ne peut se traduire que par un léger accroissement d'épaisseur du cadran fixe de roulis, déjà présent.

L'invention vise plus particulièrement un dispositif de visualisation de pannes pour instruments gyroscopiques comprenant une alarme de vitesse réduite et une alarme de perte d'alimentation, les deux alarmes étant associées ergonomiquement, caractérisé en ce que le dispositif comprenant deux zones d'affichage complémentaires dans le cadran de roulis, l'une composée d'un seul élément actif pour informer de la disparition de l'alimentation, l'autre composée d'un ensemble d'éléments actifs juxtaposés, commutés progressivement, pour donner une perception synoptique de la réduction de vitesse de la toupie gyroscopique de l'instrument.

L'invention développe plus avant l'application aux techniques des éléments à cristaux liquides notamment ceux présentant une apparence opaque en présence d'une tension d'alimentation et laissant apparaître une couleur requise en l'absence de tension d'alimentation, en étendant cette application à un affichage progressif, intuitif, rapide, pour offrir cette perception synoptique de la réduction de vitesse de la toupie, à la vigilance d'un utilisateur appelé constamment à des tâches multiples.

D'autres caractéristiques et avantages de la présente invention ressortiront de la description qui va suivre faite en regard des dessins annexés sur lesquels:

- la figure 1 est une vue de face d'une "face avant" d'un horizon gyroscopique habituel donnant l'image que voit le pilote en fonctionnement normal;
- la figure 2 est une vue de face d'une "face avant" d'horizon gyroscopique équipée conformément à l'invention;
- la figure 3 est une vue en perspective éclatée d'un dispositif selon l'invention montrant la position des moyens de visualisation; et
- la figure 4 représente le schéma électrique de principe du dispositif.

Dans la forme de réalisation représentée à la figure 2 d'une "face avant" conforme à l'invention, qui peut s'appliquer à un horizon gyroscopique à figuration à tambour, tel que décrit dans le brevet français 1 412 614, ou à un horizon à figuration plane, tel que décrit dans le brevet des Etats-Unis d'Amérique 4 419 832, la partie basse du cadran de roulis montre une zone colorée 5 informant de la disparition de l'alimentation de la toupie du gyroscope. Cette zone colorée 5 peut être réalisée sous la forme d'un élément actif unique à cristaux liquides, à moyen de commande d'alimentation à seuil 5A.

A la partie supérieure, une autre zone colorée 6 (également à cristaux liquides), disposée sous les repères de roulis, à la faculté de s'étendre progressivement au fur et à mesure que la vitesse décroît, offrant ainsi au pilote une appréciation nuancée mais simple de la situation.

Une autre caractéristique du dispositif selon l'invention est que, selon la volonté des utilisateurs, l'expansion de la manifestation colorée (6), par exemple un rougeoiement proportionnel à la perte de vitesse, peut être limitée à un angle précis du cadran de roulis (90° par exemple), ou étendue jusqu'à venir rejoindre la zone 5, réalisant ainsi une couronne complète au moment où la vitesse est devenue insuffisante pour un pilotage sûr.

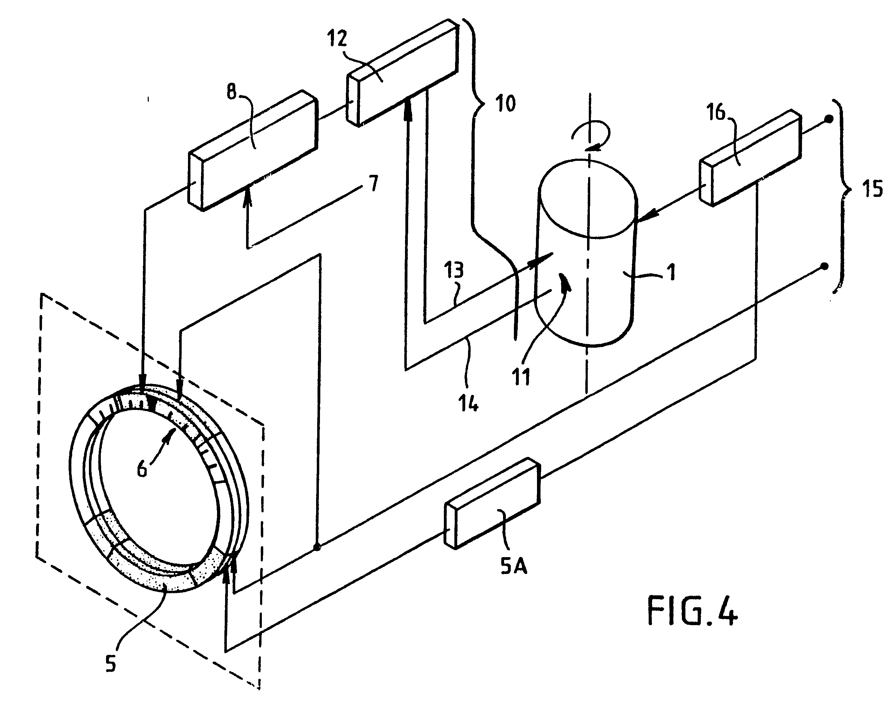

Ce choix opérationnel (angle précis ou couronne complète) est obtenu, sans modification structurelle, en agissant seulement sur un réglage électronique 7 d'un circuit de commande 8 dès lors que le circuit complet est introduit (Fig. 4).

Conformément à l'invention, pour obtenir le rougeoiement progressif de la couronne de roulis, celle-ci est constituée d'une série de motifs élémentaires indépendants 9 qui sont déconnectés les uns après les autres lorsque la vitesse décroît, laissant apparaître la couleur voulue sous les éléments déconnectés (pour la clarté du dessin seuls certains de ces motifs ont été représentés à la figure 3).

Cette commande progressive est opérée par le circuit de commande 8 qui est un circuit électronique classique commutant symétriquement par rapport à 0 et proportionnellement à la diminution de la tension de mesure. Cette tension de mesure peut être obtenue par un dispositif comme celui décrit dans le brevet FR-A-2 135 861 déjà cité ou, plus avantageusement, par un détecteur électro-optique 10 observant une zone 11 ayant des propriétés réfléchissantes caractéristiques, cette zone étant disposée à la périphérie du gyroscope 1 (Fig. 4) comme dans US-A-3 732 739.

Le détecteur électro-optique de vitesse 10 est constitué d'un ensemble d'émission-réception 12 à base de diode électroluminescente, modulée à haute fréquence, d'une fibre optique 13 conduisant la lumière modulée à la périphérie de la toupie, au moyen d'un orifice pratiqué dans le bol du gyroscope et d'une fibre optique 14 de récupération de l'énergie réfléchie.

Un circuit dit "d'amplification et mise en forme" réalise les adaptations nécessaires au bon fonctionnement du circuit de commande progressive 8.

L'alimentation générale est représentée en 15 suivi d'un moyen d'adaptation d'alimentation 16 dont une branche conduit au moyen de commande à seuil 5A de la zone colorée 5.

Il est bien entendu que la présente invention n'a été décrite et représentée qu'à titre d'exemple préférentiel et que l'on pourra apporter des équivalences dans ses éléments constitutifs sans, pour autant, sortir du cadre de ladite invention.

C'est ainsi que la représentation curviligne (zone 6) de l'alarme progressive de vitesse peut être remplacée par une représentation linéaire, ou d'une autre espèce, si nécessaire pour parfaire l'ergonomie du produit qui l'incorpore; de même, le cadran général de roulis peut être décomposé en éléments associés pour faciliter l'exploitation de l'invention, sans remettre en cause le cadre de celle-ci.

## Revendications

1. Dispositif de visualisation de pannes pour instruments gyroscopiques comprenant une alarme de vitesse réduite de la toupie gyroscopique de l'instrument et une alarme de perte d'alimentation, les deux alarmes étant associées ergonomiquement, caractérisé en ce que le dispositif comprend au moins une zone d'affichage (6) dans le cadran de roulis, cette zone comportant un ensemble d'éléments actifs juxtaposés, commutés progressivement, pour donner une perception synoptique de la réduction de vitesse de la toupie gyroscopique de l'instrument.

2. Dispositif de visualisation de pannes pour instruments gyroscopiques comprenant une alarme de vitesse réduite de la toupie gyroscopique de l'instrument et une alarme de perte d'alimentation, les deux alarmes étant associées ergonomiquement, caractérisé en ce que le dispositif comprend deux zones d'affichage complémentaires dans le cadran de roulis, l'une (5) composée d'un seul élément actif pour informer de la disparition de l'alimentation, l'autre (6) composée d'un ensemble d'éléments actifs juxtaposés, commutés progressivement, pour donner une perception synoptique de la réduction de vitesse de la toupie gyroscopique de l'instrument.

3. Dispositif de visualisation de pannes selon l'une quelconque des revendications 1, 2, caractérisé en ce que les zones d'affichage (5 - 6) sont réalisées au moyen d'éléments de cristaux liquides présentant une apparence opaque en présence d'une tension d'alimentation et laissant apparaître une couleur requise en l'absence de tension d'alimentation.

4. Dispositif de visualisation de pannes selon la revendication 3, caractérisé en ce que les éléments de cristaux liquides comportent des symboles quelconques, soit intérieurement, soit extérieurement.

5. Dispositif de visualisation de pannes selon l'une quelconque des revendications 1 à 5, caractérisé en ce que la zone progressive (6) et la zone non progressive (5) ont la faculté de se rejoindre selon la volonté ergonomique de l'utilisateur à l'aide d'un moyen de réglage (7) de l'étendue d'affichage de la zone d'alarme progressive (6).

6. Dispositif de visualisation de pannes selon l'une quelconque des revendications 1 à 4, caractérisé en ce que la mesure de la vitesse est obtenue à l'aide de moyens détecteurs électro-optiques (10).

7. Dispositif de visualisation de pannes selon la revendication 6, caractérisé en ce que les moyens électro-optiques (10) de mesure de la vitesse observent une zone réfléchissante située à la périphérie de la toupie du gyroscope.

8. Dispositif de visualisation de pannes selon l'une quelconque des revendications 6 et 7, caractérisé en ce que les moyens électro-optiques (10) comprennent un ensemble émission-réception de lumière modulée (12) une fibre optique (13) conduisant la lumière à la périphérie de la toupie et une fibre optique (14) récupérant l'énergie lumineuse réfléchie.

## Claims

1. Device for the visual display of malfunctions for gyroscopic instruments comprising an alarm to indicate reduce speed of the gyroscopic head of the instrument and an alarm to indicate loss of power supply, the two alarms being ergonomically associated, characterized in that the device comprises at least one display zone (6) in the roll dial, this zone comprising a set of juxtaposed active elements, which are switched progressively, to give a synoptic perception of the reduction in speed of the gyroscopic head of the instrument.

2. Device for the visual display of malfunctions for gyroscopic instruments comprising an alarm to indicate reduced speed of the gyroscopic head of the instrument and an alarm to indicate loss of power supply, the two alarms being ergonomically associated, characterized in that the device comprises two complementary display zones in the roll dial, one (5) composed of a single active element to provide information on the failure of the power supply, the other (6) composed of a set of juxtaposed active elements, which are switched progressively, to give a synoptic perception of the reduction in speed of the gyroscopic head of the instrument.

3. Device for the visual display of malfunctions according to either one of claims 1, 2, characterized in that the display zones (5 - 6) are formed by means of liquid-crystal elements exhibiting an opaque appearance in the presence of a supply voltage and permitting the appearance of a required colour in the absence of supply voltage.

4. Device for the visual display of malfunctions according to Claim 3, characterized in that the liquid-crystal elements comprise any symbols whatsoever, either internally or externally.

5. Device for the visual display of malfunctions according to any one of claims 1 to 5, characterized in that the progressive zone (6) and the non-progressive zone (5) can be made to meet according to the ergonomic will of the user with the aid of a means (7) for regulating the extent of display of the progressive alarm zone (6).

6. Device for the visual display of malfunctions according to any one of claims 1 to 4, characterized in that the measurement of the speed is obtained with the aid of electro-optical detecting means (10).

7. Device for the visual display of malfunctions according to Claim 6, characterized in that the electro-optical means (10) for measuring the speed observe a reflecting zone situated at the periphery of the head of the gyroscope.

8. Device for the visual display of malfunctions according to either one of claims 6 and 7, characterized in that the electro-optical means (10) comprise an emission-reception assembly for modulated light (12), an optical fibre (13) conducting the light to the periphery of the head and an optical fibre (14) recovering the reflected light energy.

## Patentansprüche

1. Vorrichtung zur Störungsanzeige für gyroskopische Instrumente mit einer Warnfunktion bei Abnahme der Kreiselgeschwindigkeit des Instruments und einer Warnfunktion bei Versorgungsausfall, wobei die beiden Warnfunktionen ergonomisch einander zugeordnet sind, dadurch gekennzeichnet, daß die Vorrichtung mindestens eine Anzeigezone (6) in der Rollbewegungsskala und diese Zone eine Menge nebeneinanderliegender, progressiv zugeschalteter, aktiver Elemente enthält, um eine Übersicht über den Geschwindigkeitsverlust des gyroskopischen Kreisels des Instruments zu bieten.

2. Vorrichtung zur Störungsanzeige für gyroskopische Instrumente mit einer Warnfunktion bei Verminderung der Kreiselgeschwindigkeit des Instruments und einer Warnfunktion bei Versorgungsausfall, wobei die beiden Warnfunktionen ergonomisch einander zugeordnet sind, dadurch gekennzeichnet, daß die Vorrichtung zwei komplementäre Anzeigezonen in der Rollbewegungsskala enthält, wovon die eine (5) aus einem einzigen aktiven Element zur Anzeige des Versorgungsverlusts besteht und die andere (6) aus einer Menge nebeneinanderliegender, progressiv zugeschalteter, aktiver Elemente zusammengesetzt ist, um eine Übersicht über den Geschwindigkeitsverlust des gyroskopischen Kreisels des Instruments zu bieten.

3. Vorrichtung zur Störungsanzeige nach einem der Ansprüche 1 oder 2, dadurch gekennzeichnet, daß die Anzeigezonen (5, 6) mittels Flüssigkristallelementen verwirklicht sind, die in Gegenwart einer Versorgungsspannung ein undurchsichtiges Aussehen annehmen und eine benötigte Farbe erscheinen lassen, falls die Versorgungsspannung fehlt.

4. Vorrichtung zur Störungsanzeige nach Anspruch 3, dadurch gekennzeichnet, daß die Flüssigkristallelemente, entweder innen oder außen, beliebige Symbole enthalten.

5. Vorrichtung zur Störungsanzeige nach einem der Ansprüche 1 bis 5, dadurch gekennzeichnet, daß die abgestufte Zone (6) und die nicht abgestufte Zone (5) je nach ergonomischem Erfordernis des Benutzers mittels einer Vorrichtung (7) zur Einstellung der Ausdehnung der abgestuften Warnzone (6) aneinanderstoßen können.

6. Vorrichtung zur Störungsanzeige nach einem der Ansprüche 1 bis 4, dadurch gekennzeichnet, daß die Geschwindigkeitsmessung mittels elektrooptischer Aufnehmvorrichtungen (10) erfolgt.

7. Vorrichtung zur Störungsanzeige nach Anspruch 6, dadurch gekennzeichnet, daß die elektrooptischen Vorrichtungen (10) eine reflektierende Zone am Umfang des Kreisels des Gyroskops beobachten.

8. Vorrichtung zur Störungsanzeige nach einem der Ansprüche 6 und 7, dadurch gekennzeichnet, daß die elektrooptischen Vorrichtungen (10) eine Baugruppe (12) zum Aussenden und Empfangen von moduliertem Licht enthalten, wobei ein Lichtleiter (13) das Licht zum Umfang des Kreisels leitet und ein Lichtleiter (14) die reflektierte Lichtenergie zurückführt.

FIG.1

FIG.2

FIG.3

FIG.4